# EUROPEAN PATENT APPLICATION

(11) **EP 1 990 603 A1**
(43) Date of publication of application: **12.11.2008**
(21) Application number: 08251644.4
(22) Date of filing: 08.05.2008
(51) Int. Cl.: G01B 11/14, B29C 33/22, B29C 45/17, B29C 45/80

(54) **Tooling die parting line displacement sensor system**

(30) Priority: 11.05.2007 US 747258
(71) Applicant: Rehrig Pacific Company, Los Angeles, CA 90023 (US)
(72) Inventor: Wilkerson, Jeffrey L., Grapevine, TX 76051 (US)
(74) Representative: Chave, Lynne Fiona

(57) **Abstract**

A displacement sensor system for use with a tooling die having a die parting line between die sections includes a target that is attachable to one of the die sections and a laser sensor that is attachable to another of the die sections. The laser sensor is operative to transmit a laser toward the target, receive a reflected laser from the target, and produce a signal representing a distance between the die sections.

## Description

### BACKGROUND OF THE INVENTION

This invention relates to a displacement sensor system, and more particularly, to a laser sensor system that can be magnetically attached to a tooling die to detect displacement of the tooling die at a parting line.

Molding machines, such as plastic injection molding machines, metal casting equipment, and the like utilize tooling dies to form a material into a desired shape. Typically, the tooling die includes a movable die section and a fixed die section that define a cavity in the desired shape. The molding machine exerts a clamping force that holds the die sections together at a parting line while injecting melted material into the cavity under an injection pressure. The material then cools and solidifies in the desired shape.

One drawback of such molding machines and tooling dies is that variations in the molding machine may cause the injection pressure to be greater than the clamping force. This may cause the die sections to open a small amount at the parting line during injection of the melted material. For example, the die sections may open a few thousandths of an inch and allow melted material to flow from the cavity, which can result in "flash" on the molded component and damage the tooling die.

One proposed solution is to monitor the separation distance between the die sections using a sensor. A potential barrier to using a sensor is sufficiently securing the sensor to the die sections to permit accurate measurement. Additionally, molding machines typically use a variety of different tooling dies over a period of time to mold different components. Therefore, there is an additional desire to be able to move the sensor from one tooling die to another tooling die. This invention addresses these needs and overcomes the shortcomings and drawbacks of the prior art.

### SUMMARY OF THE INVENTION

An example displacement sensor system for use with a tooling die having a die parting line between die sections includes a target that is attachable to one of the die sections and a laser sensor that is attachable to the other die section. The laser sensor is operative to transmit a laser toward the target, receive a reflected laser from the target, and produce a signal representing a distance between the die sections.

In another aspect, a displacement sensor system includes at least one sensor member for detecting a distance between die sections, where the at least one sensor member includes at least one magnet for magnetically attaching the sensor member to one of the die sections. Thus, the magnet also provides a method of attaching the sensor member to the tooling die in a removable manner.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.

Figure 1 illustrates an example molding machine having a displacement sensor system.

Figure 2 illustrates an example of the displacement sensor system.

### DETAILED DESCRIPTION OF THE PREFERRED EMBODIMENT

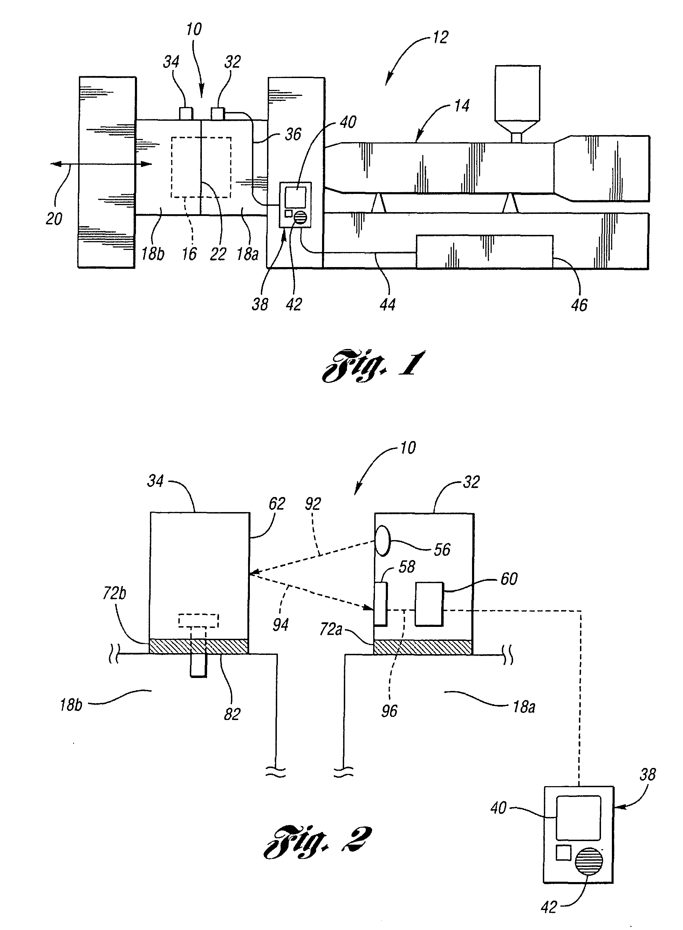

Figure 1 illustrates selected portions of an example displacement sensor system 10 used in a molding machine 12. In this example, the molding machine 12 is a polymer injection molding machine. However, it is to be understood that this is not a limitation on the disclosed examples, and that there are various other types of molding machines that may benefit from the disclosed examples.

In the illustrated example, the molding machine 12 includes an injection section 14 that receives and melts a polymer that is to be injection molded. The liquid polymer is injected under an injection pressure into a cavity 16 formed between tooling die sections 18a and 18b. In this example, the die section 18a is fixed relative to the die section 18b, which moves along direction 20 to open or close the cavity 16. When in a closed position, the die sections 18a and 18b abut at a parting line 22.

The displacement sensor system 10 includes a first sensor member 32 attached to the die section 18a and a second sensor member 34 attached to the die section 18b. The sensor members 32 and 34 cooperate to detect a displacement distance between the die sections 18a and 18b. For example, the first sensor member 32 transmits a signal representing the displacement distance through line 36 to a controller 38.

In this example, the controller 38 includes a display 40 for providing a visual indication of the displacement distance to an operator. Optionally, the controller 38 may also include an alarm 42 in the form of the speaker that provides an audible indication in response to the displacement distance varying from a predetermined threshold, such as a predetermined acceptable range. Alternatively, the alarm may be in the form of a visual indication displayed on the display 40.

Line 44 electrically connects the controller 38 to an injection machine controller 46. The injection machine controller 46 controls operation of the injection machine 12, such as opening and closing of the die sections 18a and 18b, a clamp force that holds the die sections 18a and 18b together, the injection pressure, and other operating parameters of the injection machine 12. For example, the injection machine controller 46 may increase the clamping force in response to the displacement distance varying from the predetermined threshold. The controller 38 may include hardware, software, or a combination of hardware and software for storing values of the predetermined threshold, and comparing the displacement distance to the stored values to determine whether the displacement distance varies. If the displacement distance varies, the controller 38 may signal the injection machine controller 46 to increase the clamping force.

The controller 38 may also save a log the signal from the first sensor member 42 or calculated distances over a desired period of time. Logging of the signal or displacement distance values provides the benefit of having a history of displacement distances over a period of operation of the molding machine 12. For example, the history may be over a period of time when the molding machine 12 is automatically operated without supervision of an operator.

Figure 2 illustrates an example of the displacement sensor system 10. In this example, the first sensor member 32 and the second sensor member 34 include respective magnets 72a and 72b for attaching the sensor members 32 and 34 to the respective die sections 18a and 18b. In one example, the magnets 72a and 72b are permanent magnets. Attaching the sensor members 32 and 34 using the magnets 72a and 72b provides the benefit of removably securing the sensor members 32 and 34 to the die sections 18a and 18b. Additionally, the magnets 72a and 72b firmly affix the sensor members 32 and 34 such that the sensor displacement system 10 can accurately detect the distance between the die sections 18a and 18b without significant variation caused by movement of the die section 18b or vibration from the molding machine 12.

Alternatively, the first sensor member 32, the second sensor member 34, or both may be attached to the die sections 18a and 18b using a fastener 82 rather than the magnets 72a and 72b. The magnets 72a and 72b or the fastener 82 provide the benefit of allowing the sensor members 32 and 34 to be removed from the die sections 18a and 18b and secured to another tooling die used in the molding machine 12, or used with another molding machine. The magnets 72a and 72b have the added benefit of not requiring any alteration to the die sections 32 and 34, such as the machining of screw threads. Thus, the displacement sensor system 10 is portable and may be used with a variety of different tooling dies.

In the disclosed examples, the first sensor member 32 is a laser sensor and a second sensor member 34 is a target. For example, the laser sensor includes a laser diode 56, a laser image sensor 58 (e.g., a charge coupled device), and a processor 60. The target includes a reflective surface 62.

In operation, the laser diode 56 transmits a laser 92 toward the second sensor member 34. The laser 92 reflects off of the reflective surface 62 in the form of a reflected laser 94. The laser image sensor 58 receives the reflected laser 94 and transmits an electrical signal along line 96 to the processor 60. The electrical signal represents the location on the laser image sensor 58 that receives the reflected laser 94. As the die section 18b moves relative to the die section 18a, the angle of the reflected laser 94 changes such that the received location on the laser image sensor 58 changes. Thus, the received location corresponds to the distance between the die sections 18a and 18b.

The processor 60 may be used to calibrate or calculate the distance between the die sections 18a and 18b based upon the signal received from the laser image sensor 58. The processor 60 then sends an electrical signal to the controller 38 that represents the displacement distance between the die sections 18a and 18b. In one example, the laser sensor and target are capable of measuring distances as low as one mil between the die sections 18a and 18b. Given this description, one of ordinary skill having the benefit of this disclosure will be able to select a suitable laser sensitivity to meet their particular needs.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A displacement sensor system for use with a tooling die having a die parting line between at least two die sections, comprising:
a target that is attachable to one of the die sections; and
a laser sensor that is attachable to the other die section and operative to transmit a laser toward the target, receive a reflected laser from the target, and produce a signal representing a distance between the die sections.

2. The displacement sensor system as recited in claim 1, wherein the laser sensor comprises a laser diode.

3. The displacement sensor system as recited in claim 1, wherein the laser sensor comprises a laser image sensor.

4. The displacement sensor system as recited in claim 3, wherein the laser sensor comprises a processor electrically connected with the laser image sensor.

5. The displacement sensor system as recited in claim 1, further comprising a controller for receiving the signal from the laser sensor.

6. The displacement sensor system as recited in claim 5, wherein the controller comprises a display for indicating the distance.

7. The displacement sensor system as recited in claim 5, wherein the controller comprises an alarm for indicating whether the distance varies from a predetermined threshold.

8. The displacement sensor system as recited in claim 5, further comprising a mold machine controller electrically connected with the controller, the mold machine controller controlling movement of at least one of the mold sections.

9. The displacement sensor system as recited in claim 1, wherein at least one of the target or the laser sensor comprises a magnet for magnetically attaching the target or the laser sensor to one of the die sections.

10. The displacement sensor system as recited in claim 1, wherein at least one of the target or the laser sensor comprises a fastener for attaching the target or the laser sensor to one of the die sections.

11. The displacement sensor system as recited in claim 1, comprising the target, the laser sensor, and the tooling die.

12. A displacement sensor system for use with a tooling die having a die parting line between at least two die sections, comprising:
at least one sensor member for detecting a distance between the die sections, the at least one sensor member having at least one magnet for magnetically attaching the sensor member to one of the die sections.

13. The displacement sensor system as recited in claim 12, wherein the at least one sensor member comprises a first sensor member and a second sensor member, and the at least one magnet comprises a first magnet for magnetically attaching the first sensor member to one of the die sections and a second magnet for magnetically attaching the second sensor member to another of the die sections.

14. The displacement sensor system as recited in claim 13, wherein the first sensor member comprises a laser sensor having a laser diode, a laser image sensor, and a processor, and the second sensor member comprises a target.

15. The displacement sensor system as recited in claim 12, wherein the at least one magnet comprises a permanent magnet.

16. The displacement sensor system as recited in claim 13, comprising the target, the laser sensor, and the tooling die.

17. A method of attaching at least one sensor member to a tooling die having a die parting line between at least two die sections, comprising:
removably magnetically attaching the at least one sensor member to one of the die sections.

18. The method as recited in claim 17, further comprising magnetically attaching a first one of the at least one sensor member to one of the die sections and magnetically attaching another one of the at least one sensor member to another of the die sections.

19. The method as recited in claim 17, further comprising magnetically attaching a target of the at least one sensor member to a moveable one of the die sections and magnetically attaching a laser sensor of the at least one sensor member to a fixed one of the die sections.
